# EUROPEAN PATENT APPLICATION

(11) **EP 4 578 275 A1**
(43) Date of publication of application: **02.07.2025**
(21) Application number: 24223344.3
(22) Date of filing: 27.12.2024
(51) Int. Cl.: A01J 25/16, A01J 27/00

(54) **SYSTEM FOR SURFACE CLEANING OF A WHEEL OF CHEESE WITH A CYLINDRICAL OR SUBSTANTIALLY CYLINDRICAL SHAPE COMPRISING A RIGID OR SEMI-RIGID RIND**

(30) Priority: 28.12.2023 IT 202300028143
(71) Applicant: Colussi Ermes SRL, 33072 Casarsa Della Delizia (PN) (IT)
(72) Inventor: Colussi, Giovanni Battista, 33072 Casarsa della Delizia (PN) (IT)
(74) Representative: Frare, Paolo

(57) **Abstract**

The present finding relates to a system (1) for surface cleaning of a wheel of cheese (2) with a cylindrical or substantially cylindrical shape, comprising a rigid or semi-rigid rind, comprising: handling means (5), comprising a support surface (6) which can be moved along an advancement direction (7); hindering means (9), facing the support surface (6) and configured to rest on a section of a lateral surface (3) of a cylindrical or substantially cylindrical wheel of cheese (2), to the opposite side to the support surface (6), when the wheel of cheese (2) is placed on the support surface (6) with the lateral surface (3), so as to exert on the lateral surface (3) a resistant force (10), acting in a direction parallel to the support surface (6) and directed on the opposite side to the advancement direction (7), which causes the rolling of the lateral surface (3) of the wheel of cheese (2) on the support surface (6) while the support surface (6) advances along the advancement direction (7); washing means (15), configured to spray one or more water jets (16) against the external surface (30) of a cylindrical or substantially cylindrical wheel of cheese (2), when the wheel of cheese (2) is placed on the support surface (6) with the lateral surface (3) thereof; electronic control means (20), operationally connected to the handling means (5) and to the washing means (15) to operate them.

## Description

The present invention refers to a system for surface cleaning of a cylindrical or substantially cylindrical wheel of cheese, comprising a rigid or semi-rigid rind.

It is known that certain typologies of cheese, and in particular cheeses having an external surface, typically referred to as a rigid or semi-rigid rind, enclosing an edible dough, require, before cutting and possible packaging, the removal from the rind of any dirt, mold, or other material that can be formed and/or deposited on the rind during the aging process.

Most of such cheeses are made in "forms" whose shape is cylindrical or substantially cylindrical.

It should be noted that in the present text, the expression "substantially cylindrical" means a shape similar to a cylinder, but not exactly cylindrical, for example, because the lateral surface and/or one or both of the bases of the cylinder can be bulged, arcuated, and/or irregular.

In order to industrially achieve the cleaning of the rind, using automated cleaning systems is currently known, which generally comprise a tunnel inside which the wheels of cheese are passed, typically resting with one of their two bases on conveyor belts which cause their advancement inside the tunnel; during their advancement inside such tunnels, the wheels of cheese are then subjected to a surface cleaning treatment by known-type cleaning means.

A first known typology of such cleaning means comprises rotating brushes, whose bristles protrude radially from rollers placed in rotation by electric motors, which brush the rind of the wheels of cheese that pass through the tunnel in order to mechanically remove dirt, mold, or other materials present on the rind.

Other known-type cleaning means provide the spraying of high-pressure water jets against the rind of the cheese that passes through the tunnel.

However, such known-type cleaning systems have certain drawbacks.

In particular, the base of the wheels of cheese placed on the conveyor belt, which allows the movement of such wheels of cheese inside the tunnel, does not come into contact with the brushes or water jets, thereby after subjecting the other base and the lateral surface to a first passage through the tunnel, it is necessary to turn the wheel of cheese and repeat the cleaning operation, this time with the base that was previously placed on the conveyor belt exposed to the action of the brushes or water jets.

This is, however, rather inconvenient, requires a significant amount of time, and results in a rather high energy consumption (and water consumption, in the case of using water jets).

The main task of the present finding is to obtain a system for surface cleaning of a wheel of cheese with a cylindrical or substantially cylindrical shape, comprising a rigid or semi-rigid rind, capable of efficiently performing the surface cleaning of a large number of wheels of cheese in an easy and fast manner.

In the scope of such task, an object of the present finding is to obtain a system for surface cleaning of a wheel of cheese with a cylindrical or substantially cylindrical shape, comprising a rigid or semi-rigid rind, that allows to reduce the water consumption required to obtain the complete surface cleaning of a wheel of cheese with respect to the known solutions illustrated above which use water jets.

Another object of the finding is to obtain a system for surface cleaning of a wheel of cheese with a cylindrical or substantially cylindrical shape, comprising a rigid or semi-rigid rind, that can be used for cleaning wheels of cheese of different diameters.

The task and objects according to the present invention are achieved by a system for surface cleaning of a wheel of cheese with a cylindrical or substantially cylindrical shape, comprising a rigid or semi-rigid rind, comprising:
- handling means comprising a support surface which can be moved along an advancement direction;
- hindering means facing the support surface and configured to rest on a section of a lateral surface of a cylindrical or substantially cylindrical wheel of cheese, comprising a rigid or semi-rigid rind, to the opposite side to the support surface, when such wheel of cheese is placed on the support surface with its lateral surface, so as to exert on the lateral surface a resistant force, acting in a direction parallel to the support surface and directed on the opposite side to the advancement direction, which causes the rolling of the lateral surface of the wheel of cheese on the support surface while the support surface advances along the advancement direction;

- washing means configured to spray one or more water jets against the external surface of a cylindrical or substantially cylindrical wheel of cheese, comprising a rigid or semi-rigid rind, when such wheel of cheese is placed on the support surface with the lateral surface thereof;
- electronic control means, operationally connected to the handling means and to the washing means to operate them.

Other advantageous features of the finding are reported in the dependent claims.

The features and advantages of the present finding will be more apparent from the following exemplary and non-limiting description, referred to the attached schematic drawings, in which:
- Figure 1 is a schematic side-sectional view of an advantageous embodiment of part of a system according to the finding during the cleaning of three wheels of cheese;
- Figures 2 to 4 are schematic side-sectional views of an advantageous embodiment of part of a system according to the invention and three wheels of cheese at various steps of the cleaning process;
- Figure 5 is a side view of part of an advantageous embodiment of the system according to the finding;
- Figure 6 is a section operated according to the section plane VI-VI of Figure 5.

With reference to the attached figures, number 1 indicates overall a system for surface cleaning of a wheel of cheese, schematically illustrated in the attached figures and indicated by number 2, with a cylindrical or substantially cylindrical shape, comprising a rigid or semi-rigid rind.

Such wheel of cheese 2 comprises an external surface 30, also referred to as a rind, comprising a lateral surface 3, enclosed by two bases 4a and 4b, to define overall a cylindrical or substantially cylindrical shape (also identifiable as a wheel-shaped configuration).

It should be noted that, in the present text, the expression "system" can mean both a single machine that comprises all the illustrated features and a plant that can comprise multiple machines and/or devices configured and arranged in such a way as to cooperate with each other to perform the function object of the finding (thus particularly the surface cleaning of a wheel of cheese with a cylindrical or substantially cylindrical shape, comprising a rigid or semi-rigid rind).

The system 1 comprises handling means 5, comprising a support surface 6 which can be moved along an advancement direction 7.

The support surface 6 can be part of a conveyor belt 8, for example loop-wound, as in the attached figures, and can preferably be moved by the action of an electric motor, not illustrated in the attached figures.

In advantageous embodiments, the conveyor belt 8 can be made of plastic and/or metal.

In advantageous embodiments, the conveyor belt 8 can have a continuous structure, or the same can consist of a plurality of links arranged in series.

The system 1 further comprises hindering means 9 facing the support surface 6 and configured to rest on a section of the lateral surface 3 of a cylindrical or substantially cylindrical wheel of cheese 2, comprising a rigid or semi-rigid rind, to the opposite side to the support surface 6, when such wheel of cheese 2 is placed on the support surface 6 with its lateral surface 3, so as to exert on such lateral surface 3 a resistant force, illustrated in the attached figures by an arrow 10, acting in a direction parallel to the support surface 6 and directed on the opposite side to the advancement direction 7, which causes the rolling of the lateral surface 3 of the wheel of cheese 2 on the support surface 6, around the central cylindrical axis 21 of the wheel 2, while the support surface 6 advances along the advancement direction 7.

During the movement of the support surface 6 in the advancement direction 7, a wheel of cheese 2 positioned with its lateral surface 3 on such support surface 6 is subjected, by the action of its contact with the support surface 6 itself, to an advancement force 11, parallel to the advancement direction 7 and directed in such direction, which tends to drag the wheel of cheese 2 in the advancement direction 7; in such condition, the hindering means 9, resting on the lateral surface 3 of the wheel of cheese 2 to the opposite side to the support surface 6, are opposed to the translation of the wheel of cheese 2, generating a resistant force 10, opposite to the advancement force 11, that acts on the lateral surface 3 of the wheel of cheese 2.

The advancement force 11 has an intensity greater than that of the resistant force 10, as the advancement force 11 depends on the friction between the lateral surface 3 of the wheel of cheese 2 and the support surface 6 and is therefore proportional to the weight of the wheel of cheese 2 plus the weight of the section of the hindering means 9 that burdens the lateral surface 3, while the advancement force 10 depends on the friction between the hindering means 9 and the lateral surface 3 of the wheel of cheese 2 and is therefore proportional only to the weight of the section of the hindering means 9 that burdens the lateral surface 3.

The sum of the advancement force 11 and the resistant force 10, acting at diametrically opposite (or approximately diametrically opposite) points to the wheel of cheese 2, causes the rotation of such wheel of cheese 2 while the same advances in the advancement direction 7 (due to the fact that the intensity of the advancement force 11 is still greater than that of the resistant force 10).

In an advantageous embodiment, the hindering means 9 comprise an element with an elongated shape 12 which has two ends, 13a and 13b, fixed with respect to the support surface 6, between which there is a flexible central section 14 facing the support surface 6 in such a way as to rest on a section of the lateral surface 3 of a cylindrical or substantially cylindrical wheel of cheese 2, comprising a rigid or semi-rigid rind, when this is placed on the support surface 6 with such lateral surface 3, so as to exert on such lateral surface 3 the aforementioned resistant force 10 when the support surface 6 advances along the advancement direction 7.

During the advancement in the direction of the advancement direction 7 and the rotation of the wheel of cheese 2, the latter flexes and lifts the various regions of the central section 14 that successively come into contact with the same; after the wheel of cheese 2 has passed, such regions then return towards the support surface 2 under the action of the weight of such central section 14, being arranged substantially resembling a catenary.

Advantageously, the element with an elongated shape 12 has a perforated structure, so that a liquid can pass through it; for example, the element with an elongated shape 12 is or comprises a belt chain, preferably with metallic links.

In further advantageous embodiments, not depicted in the attached figures, the hindering means 9 can comprise a translating surface (which can, for example, be part of a second conveyor belt), not illustrated, parallel or substantially parallel to the support surface 6, and movable with respect to the same parallel to the advancement direction 7, which can rest on a section of the lateral surface 3 of a cylindrical or substantially cylindrical wheel of cheese 2, comprising a rigid or semi-rigid rind, to the opposite side to the support surface 6, when such wheel of cheese 2 is placed on the support surface 6 with its lateral surface 3, so as to exert on such lateral surface 3 the resistant force 10; in such advantageous embodiment, in order to cause the rotation of the wheel of cheese 2, the translating surface can be moved (for example due to handling means, such as for example an electric motor, not shown) during the advancement of the support surface 6, in the direction opposite to the advancement direction 7, preferably at an advancement speed lower than the speed at which the support surface 6 is moved in the advancement direction 7.

In a further advantageous embodiment, not illustrated, the translating surface can also be moved in the same direction as the support surface 6 in a region of the system 1 wherein the wheel of cheese 2 only needs to be translated in the advancement direction 7 and not rotated, for example, in order to bring such wheel of cheese 2 to a region where it must be subjected to washing (where it can then also be rotated by stopping or reversing the movement direction of the translating surface) or from the latter region to a further region of the system 1, for example to a region from which the wheel of cheese 2 can be extracted from the system 1.

The system 1 further comprises washing means 15 configured to spray one or more water jets 16, preferably at high pressure (e.g., at a pressure between 1 and 250 bars, more preferably between 10 and 20 bars), against the external surface 30 of a cylindrical or substantially cylindrical wheel of cheese 2, comprising a rigid or semi-rigid rind, when such wheel of cheese 2 is placed on the support surface 6 with the lateral surface 3 thereof.

In an advantageous embodiment, such washing means 15 comprise a plurality of nozzles 17, hydraulically connected to a hydraulic system, not illustrated in the attached figures, of the system 1; advantageously, such nozzles 17 are positioned in such a way that the water jets 16 delivered by them impact on the lateral surface 3 and the bases 4a, 4b of a wheel of cheese 2 while it is positioned on the support surface 6 with the lateral surface 3 and advances in the advancement direction 7, simultaneously with its rolling by the action of the hindering means 9.

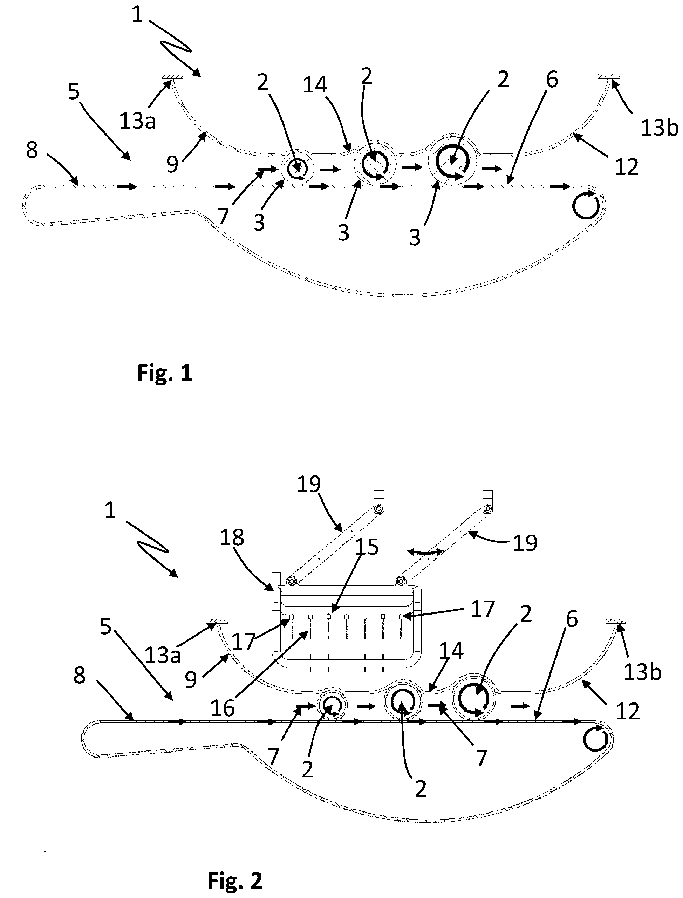

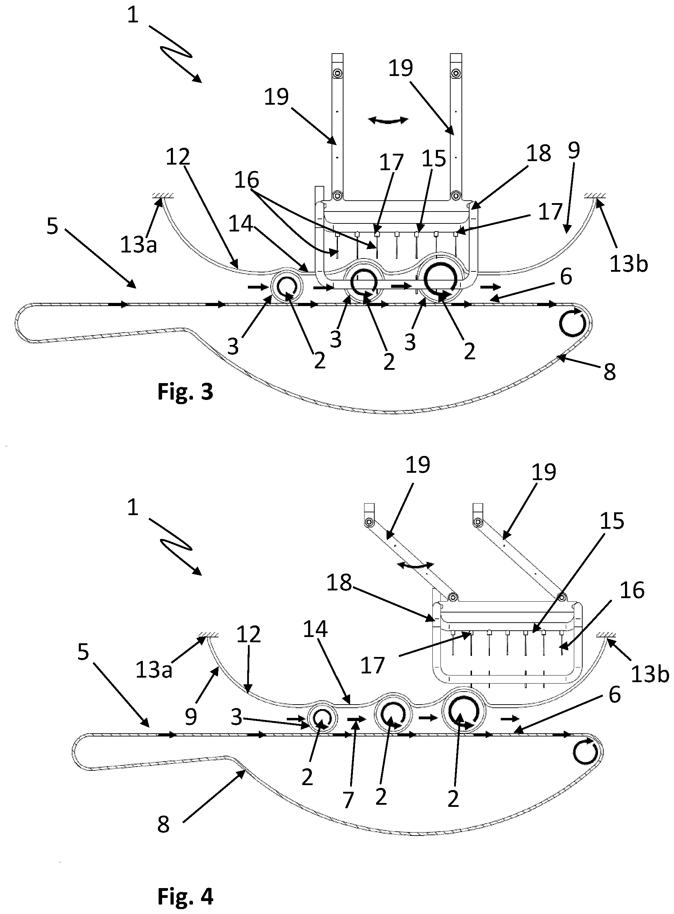

In advantageous embodiments, such as for example those illustrated in Figures 2-4, the washing means 15 can move with respect to the handling means 5 along a direction parallel to the advancement direction 7 and/or along a direction perpendicular to such advancement direction 7.

In advantageous embodiments, such as for example those illustrated in Figures 2-6, the nozzles 17 are mounted on a frame 18, shaped and positioned in such a way as to extend laterally to the two bases 4a, 4b of a wheel of cheese 2, with a cylindrical or substantially cylindrical shape, comprising a rigid or semi-rigid rind, positioned with its lateral surface 3 on the support surface 6, and above a section of the hindering means 9 resting above the lateral surface 3 of such wheel of cheese 2.

Advantageously, the system 1 comprises means suitable for supporting the frame 18 and for moving it alternately back and forth along the advancement direction 7 and/or making it oscillate alternately back and forth above the support surface 6 and the hindering means 9; such means comprise, for example, two connecting rods 19, hinged at their first end to two distinct points of the frame 18 and at their second end to two fixed regions (or which cannot move) of the system 1 with respect to the support surface 6.

Advantageously, such connecting rods can be moved, for example, by an electric motor, not illustrated in the attached figures.

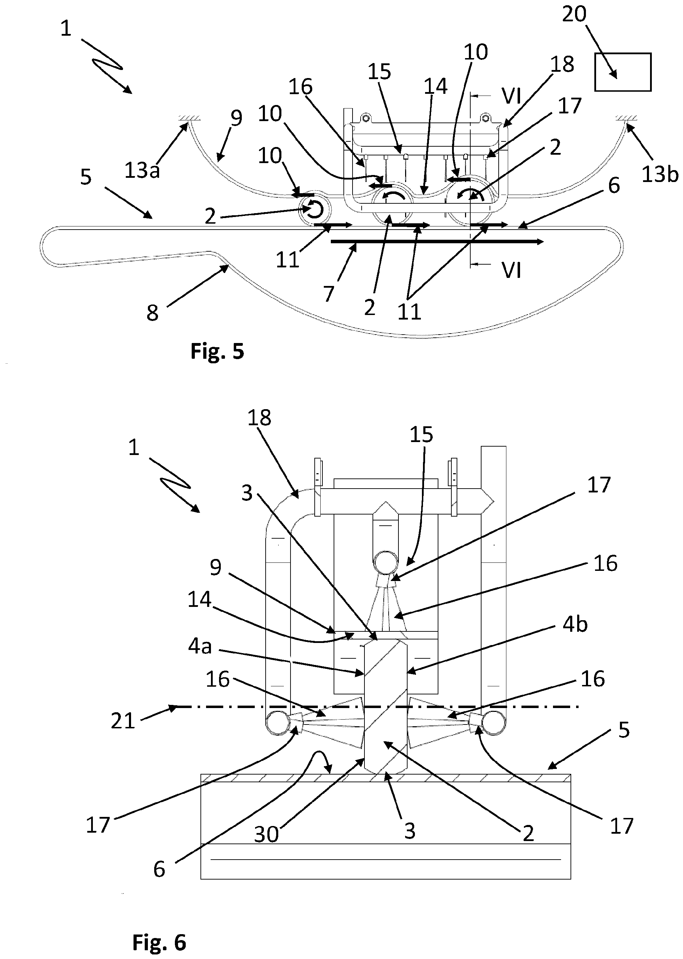

The system 1 further comprises electronic control means 20, schematically represented in Figure 5 by a rectangle, operationally connected to the handling means 5 and to the washing means 15 to operate them.

Advantageously, the electronic control means 20 can consist of or comprise a programmable logic controller (commonly referred to as a PLC), a microprocessor, a microcontroller, etc.

The operation of the system 1 according to the finding is described below.

One or more wheels of cheese 2, with a cylindrical or substantially cylindrical shape and comprising a rigid or semi-rigid rind, having, for example, all the same dimensions or dimensions different from each other can be positioned with their lateral surface 3 placed on the support surface 6, aligned with each other, one behind the other, along the advancement direction 7, in such a way that the bases 4a, 4b of all the wheels of cheese 2 are parallel or substantially parallel to each other and to the advancement direction ("substantially parallel" means parallel except for irregularities in the flatness of such bases and/or small inclinations up to a maximum of 2 degrees).

At this point, for example, following an on command given by a device (such as for example a button, a lever, a command panel, a user interface, etc.), not illustrated, operationally connected to the electronic control means 20, suitable for allowing a user to issue an on command recognizable by the electronic control means 20, the electronic control means 20 activate the handling means 5 (for example the conveyor belt 8) to bring in movement the support surface 6 in the advancement direction 7.

As illustrated in the attached figures, the hindering means 9 are positioned over the various wheels of cheese 2, resting on their lateral surface 3 to the side opposite to the support surface 6.

As previously explained, during the movement of the support surface 6 in the advancement direction 7, the wheels of cheese 2 positioned with their lateral surface 3 on such support surface 6, due to the advancement force 11 exerted by the support surface 6 and the resistant force 10 exerted by the hindering means 9, translate in the advancement direction and simultaneously rotate around their central cylindrical axis 21.

During the advancement and rotation of the wheels of cheese 2, the electronic control means 20 drive the washing means 15 to spray the one or more water jets 16 against the external surface 30 of the various wheels of cheese 2, reaching and effectively cleaning, due to the rotation of the latter, the entire external surface 30 of the wheels of cheese 2.

The possible movement of the washing means 15 along a direction parallel to the advancement direction 7 and/or along a direction perpendicular to the advancement direction 7 allows to improve the washing effectiveness and speed up the entire cleaning process.

As the various wheels of cheese 2 are brought by the support surface 6 out of the region which comprises the washing means 15, the same can be removed from such support surface 6, and new wheels of cheese 2 can be loaded on the same, so as to undergo the surface cleaning process.

It has thus been demonstrated that the finding solves the task and the objects mentioned above, since, by rotating the wheels of cheese during their advancement in the advancement direction, it is possible to expose the entire external surface (or rind) of such wheels of cheese to the water jets for cleaning them, thus allowing the entire external surface to be effectively cleaned at one time, without the need to manually turn the wheel of cheese and repeat the cleaning after a first cleaning, as in the cited prior art, and consequently reducing both the time and the water consumption required for cleaning with respect to such prior art.

Moreover, the system according to the invention is suitable for consecutively treating wheels of cheese with a cylindrical or substantially cylindrical shape, comprising a rigid or semi-rigid rind, with different diameters or heights, without requiring adaptations of the system to be adapted to such different dimensions.

It is clear, finally, that the system according to the finding described here is susceptible to numerous modifications or variants, all falling within the finding; furthermore, all details can be replaced by technically equivalent elements without departing from the scope of the appended claims.

## Claims

1. System (1) for surface cleaning of a wheel of cheese (2) with a cylindrical or substantially cylindrical shape comprising a rigid or semi-rigid rind, comprising:
- handling means (5) comprising a support surface (6) which can be moved along an advancement direction (7);
- hindering means (9) facing said support surface (6) and configured to rest on a section of a lateral surface (3) of a cylindrical or substantially cylindrical wheel of cheese (2) comprising a rigid or semi-rigid rind, to the opposite side to said support surface (6), when said wheel of cheese (2) is placed on said support surface (6) with said lateral surface (3), so as to exert on said lateral surface (3) a resistant force (10), acting in a direction parallel to said support plane (6) and directed on the opposite side to said advancement direction (7), which causes the rolling of said lateral surface (3) of said wheel of cheese (2) on said support plane (6) while said support plane (6) advances along said advancement direction (7) ;
- washing means (15) configured to spray one or more water jets (16) against the external surface (30) of a cylindrical or substantially cylindrical wheel of cheese (2) comprising a rigid or semi-rigid rind, when said wheel of cheese (2) is placed on said support surface (6) with said lateral surface (3) thereof;
- electronic control means (20) operationally connected to said handling means (5) and to said washing means (15) to operate them.

2. System (1), as in claim 1, wherein said hindering means (9) comprise an element with an elongated shape (12) which has two ends (13a, 13b), fixed with respect to said support plane (6), between which there is a flexible central section (14), arranged facing said support surface (6) in such a way as to rest on a section of a lateral surface (3) of a cylindrical or substantially cylindrical wheel of cheese (2) comprising a rigid or semi-rigid rind, when said wheel of cheese (2) is placed on said support surface (6) with said lateral surface (3), so as to exert on said lateral surface (3) said resistant force (10) when said support plane (6) advances along said advancement direction (7).

3. System (1), as in claim 2, wherein said element with an elongated shape (12) has a perforated structure so that a liquid can pass through it.

4. System (1), as in one or more of the previous claims, wherein said support surface (6) is part of a conveyor belt (8).

5. System (1), as in one or more of the previous claims, wherein said washing means (15) can move with respect to said handling means (5) along a direction parallel to said advancement direction (7) and/or or along a direction perpendicular to said advancement direction (7).

6. System (1), as in one or more of the previous claims, wherein said washing means (15) comprise a plurality of nozzles (17), hydraulically connected to a hydraulic system of said system (1), configured to spray said one or more water jets (16) against the external surface (30) of a cylindrical or substantially cylindrical wheel of cheese (2) comprising a rigid or semi-rigid rind, when said wheel of cheese (2) is placed on said support surface (6) with its lateral surface (3).

7. System (1), as in claim 6, wherein said nozzles (17) are positioned in such a way that said water jets (16) delivered by them impact on said lateral surface (3) and on two bases (4a, 4b) of a cylindrical or substantially cylindrical wheel of cheese (2) comprising a rigid or semi-rigid rind, while the same is positioned on said support surface (6) with said lateral surface (3) and advances in said advancement direction (7) simultaneously with its rolling by the action of said hindering means (9) .

8. System (1), as in claims 6 or 7, wherein said nozzles (17) are mounted on a frame (18) shaped and positioned in such a way as to extend laterally to two bases (4a, 4b) of a cylindrical or substantially cylindrical wheel of cheese (2) comprising a rigid or semi-rigid rind, positioned on said support surface (6) with said lateral surface (3) and above a section of said hindering means (9) resting above said lateral surface (3) of said wheel of cheese (2) .

9. System (1), as in claim 8, comprising means suitable for supporting said frame (18) and moving it alternately back and forth in said advancement direction (7) and/or making it oscillate alternately back and forth above said support plane (6) and to said hindering means (9).

10. System (1), as in claim 9, wherein said means suitable for supporting said frame (18) and to move it alternately back and forth in said advancement direction (7) and/or to make it oscillate alternately back and forth above said support plane (6) and said hindering means (9) comprise two connecting rods (19), hinged at their first end to two distinct points of said frame (18), and at their second end to two regions of said system (1) fixed with respect to said support plane (6).
